# EUROPEAN PATENT SPECIFICATION

(11) **EP 1 978 811 B1**
(45) Date of publication and mention of the grant of the patent: **01.06.2011**
(21) Application number: 07701084.1
(22) Date of filing: 15.01.2007
(51) Int. Cl.: A23C 15/12, A23D 7/00

(54) **LINSEED BUTTER AND A METHOD OF PRODUCING LINSEED BUTTER**
LEINSAMENBUTTER UND VERFAHREN ZUR HERSTELLUNG VON LEINSAMENBUTTER
BEURRE A BASE DE LIN ET SON PROCEDE DE FABRICATION

(30) Priority: 19.01.2006 PL 37876906
(43) Date of publication of application: 15.10.2008
(73) Proprietor: Institute of Natural Fibres and Medicinal Plants, 60-630 Poznan (PL)
(72) Inventor: KANIEWSKI, Ryszard, 60-655 Poznan (PL); KOZLOWSKA, Jadwiga, PL-61-606 Pozna (PL); GAGALO, Jozef, PL-59-300 Lubin (PL)
(74) Representative: Twardowska, Aleksandra
(86) International application number: PCT/PL2007/000003
(87) International publication number: WO 2007/084019

(56) References cited:
- EP-A1- 0 096 631
- EP-A1- 0 376 407
- AU-B2- 487 363
- DE-A1- 10 356 441
- RU-C2- 2 221 432
- GREEN A G ET AL: "LINOLA - A NEW PREMIUM POLYUNSATURATED OIL" LIPID TECHNOLOGY, BARKING ESSEX, GB, vol. 6, no. 2, 1994, pages 29-33, XP008079452 ISSN: 0956-666X
- WOOD R.; KUBENA K.; O'BRIEN B.; TSENG S.; MARTIN G.: "Effect of butter, mono- and polyunsaturated fatty acid-enriched butter, trans fatty acid margarine, and zero trans fatty acid margarine on serum lipids and lipoproteins in healthy men" JOURNAL OF LIPID RESEARCH, vol. 34, no. 1, 1993, pages 1-11, XP002436033

## Description

The subject of the present invention is linseed butter and a method of manufacturing linseed butter. The subject of the present invention is meant for consumption, wherein it is characterized by its lower saturated lipid and cholesterol content compared to butter, combined with higher levels of mono- and polyunsaturated fatty acids. No additives are used in the technological process (stabilizers, emulsifiers or preservatives), and the product is not heat treated.

Presently, there are three basic types of so-called spreads available on the market: butter, margarin or a mixture of butter and margarine (mixes and oleos). At the same time, the choice of spreadable fats for bread remains unclear for some. Spreading on bread is a human dietary behavior, thus the selection of a fat for consumption should be a conscious choice. The market is very varied, and offers us various types of butters and margarines (soft, hard, with butter, low calorie) as well as butter and oil mixtures. The choice of an appropriate fat should depend on its nutritional content and health safety. Butter is an animal fat. It contains easily digestible lipids, large amounts of vitamin A, carotenoids and naturally occurring vitamins D and E. Unfortunately, it also contains saturated fatty acids and cholesterol, and has a high energy content [A. Zachar, *Jakiego t* 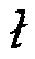 *uszczu powinniśmy używać do smarowania pieczywa?* http://fit.pl/dietadlaciebie/maslo_czy_margaryna.html].

Butter is perceived as the most "noble" animal fat. Its high nutritive value is partially due to its high levels of essential unsaturated fatty acids (EUFA: linoleic, linolenic and arachidic acids). EUFA are not produced by the human organism and must thus be ingested with food. The composition of butter changes depending on the source material used, additive content and the technology used. The basic components of butter are: fat (82 - 85%), water (15 - 16%) and non-fat dry mass (NFDM) varying from 0.8 - 1.3%. Mention should also be made of salted butter, containing 0.6-2% sodium chloride and less fat. A portion of the fat is present in free form, whereas the rest is in the form of spheres surrounded by phospholipids and proteins. The fat is composed of glycerol fatty acid esters.

In butter, being an emulsion, the solid phase is composed of lipids, whereas the dispersed phase is water. The reverse is true of cream. The water contained in butter is present in the form of strongly dispersed droplets (3-7µm in diameter) and along with components dissolved therein forms the butter's plasm.

The saturation of the yellow color of butter is dependent on the β-carotene content. This is a product of the feeding methods of the cattle from whose milk the butter is made. In the summer, when the cattle are fed fresh, green feed the butter takes on an intensive creamy-yellow color.

Two basic types of butter are discerned. from sour and sweet cream. Both may be salted or unsalted.

Presented below are marginal bytter types, generally unavailable on the Polish market:
- whey butter - composition similar to normal butter, shelf-life at 10°C - 4 days;
- melted butter - comp.: 98% fat, 1% NFDM, 1% water, shelf life at 4 to 10°C - 14 days;
- anhydrous butter - 99.8% fat, 0.2% water, shelf-life at 20°C - 3 mos., at 5°C - up to 4 years;
- dietetic butter - ca. 30% fat, varying water content, shelf life comparable to ordinary butter.

In Sweden, a popular fat product is *Bregott.* It contains 80% fat, which contains 64% milk fat and 16% soy oil. It tastes and smells like ordinary butter, and the soy oil positively influences its spreadibility, even at low temperatures [http://www.chemia.px.pl/roznosci/zywnosc_maslo.html].

Margarine (plant fat) is an emulsion containing 40 - 80% fat. It contains varying proportions of: liquid oils containing unsaturated fatty acids including EUFA, solid fats containing saturated fatty acids (SFA) and possibly *trans-* isomers. Thus, the higher liquid fat content of margarine, the healthier it tends to be. Its taste, approximating that of butter, is due to the addition of acidified milk during production. Hard margarines contain decidedly higher concentrations of unhealthy *trans-* isomers than soft margarines.

EUFA contained in large quantities in plant fats are more advantageous to the organism, positively affect blood cholesterol levels and blood clotting (which results in the delay of atherosclerosis and by the same token heart disease), and protect against breast and prostate cancer formation and/or retard its growth. A doubtless advantage of plant fats is their lack of cholesterol [A. Zachar, *Jakiego t* 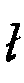 *uszczu powinniśmy używać do smarowania pieczywa?* http://fit.pl/dietadlaciebie/maslo_czy_margaryna.html].

Only a few years ago most margarines were made using hydrogenation, and contained large quantities of *trans-* fatty acids which formed during production. These fatty acids exhibit physiological activities similar to saturated fatty acids, and were thus deleterious. Presently, the production method has been changed and most spreadable margarines contain no *trans*-fatty acids or trace quantities. The situation is somewhat worse in the case of hard margarines designed for baking, thus they should not be used to spread on bread.

The caloric content of spreads is dependent on their fat content. Cream table butter contains around 74% fat and 659 kcal/100 g, whereas enriched butter contains 82,5% fat and thus more energy, 735 kcal/100 g. The fat content of margarines varies from 45% to 80% and is dependent on production recipes. This means that among margarines one may find ones which are much less caloric than others.

An argument in favor of margarine is that it contains no cholesterol, though it is an "artificial" product simulating butter.

Butter, on the other hand, has the advantage of naturally containing the fat-soluble vitamins A and D. There is a common belief that due to the vitamin A content, butter is essential for the proper functioning of vision. This is not true, however, since vision is affected by the supply of this vitamin throughout all of nutrition, and not only in butter. This vitamin may be found in dairy products and in fruits and vegetables which contain high levels of β-carotene, or provitamin A. Furthermore, it should be mentioned that table margarines are enriched with vitamin A and D at least to the level found in butter, and contain vitamin E from plant oils used in the production ["Żyjmy d 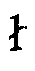 użej" 8 (sierpień) 1999, M. Makarewicz-Wujec, M. Koz 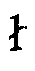 owska-Wojciechowska, Instytut Żywności and Żywienia].

The dietary properties of butter and margarine are dependent on fat composition. A majority, ca. 50% of fatty acids found in butter are saturated as is characteristic of 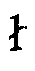 animal fats. 34 - 35% are mono-unsaturated fatty acids, and 5 - 6% are polyunsaturated fatty acids.

In margarines, these proportions are totally different. A sample composition consists of 22,3% saturated fatty acids, 55,8% monounsaturated, and 21,8% polyunsaturated ["Żyjmy d 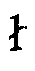 użej" 8 (sierpień) 1999, M. Makarewicz-Wujec, M. Koz 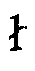 owska-Wojciechowska, Instytut Żywności and Żywienia].

For kids below three years of age, due to intensive development and large energy requirements, it is recommended that bread is only served with butter. According to the Mother and Child Institute, kids up to the age of 7 should be given butter due to the natural content of vitamins A and D, as well as the lack of *trans-* isomers formied during the hardening of oils. Pregnant and nursing women also should not consume fats containing *trans-* isomers which exhibit teratogenic activity and may cause low birth weights in kids. Adults and adolescents, however, who do not have any counter-indications (requiring limitation of energy or cholesterol), may also consume butter periodically. Though, in the adult diet, dieticians recommend the use of margarine, particularly soft margarines of low *trans-* isomer content and a high level of unsaturated acids (including EUFA) [A. Zachar, *Jakiego t* 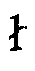 *uszczu powinniśmy używać do smarowania pieczywa?* http://fit.pl/dietadlaciebie/maslo_czy_margaryna.html].

Due to the fact that the term "butter" by itself indicates a product without admixtures of plant oils, mention should also be made of composite fats, the so-called mixes and composite butters. In these products, a portion of the milk fat is replaced with plant fats and oils. They are characterized by a lower content of saturated fats and cholesterol, and at the same time higher levels of mono- and polyunsaturated fatty acids, which is their chief advantage. These fats, then, are more advantageous to health than butter ["Żyjmy d 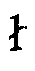 użej" 8 (sierpień) 1999, M. Makarewicz-Wujec, M. Kozowska-Wojciechowska, Instytut Żywności and Żywienia].

Modified butters are made on the basis of fresh cream. They contain, for example, 50% fat, 40% water, 5% protein and essential mineral salts. The advantage of modified butters is a lower calory content, ca. 60% of that of butter, as well as lower levels of cholesterol, along with a high spreadability.

Modified butters may be produced with a small addition of salt or plant condiments. The addition of sugar or cocoa makes the product more attractive for kids and youths. Regarding the production of butter, it is made from the cream found in bovine milk. Cream butter is made from unacidified cream, whereas the cream used for making traditional butter is unpasteurized and in itself is strongly acidified, wherein the butter made from unpasteurized cream is not a market product, but a household one destined for immediate consumption. Butter production may take on one of two forms: periodic or continuous.

The periodic process (traditional method) consists of the following technological processes: cream production, pasteurization and degassing of the cream, chilling, acidification, maturation, preparation of the cream for butter production, butter production, rinsing, salting (only for salted butter), churning, forming and packaging. The continuous process consists of the following technological processes: cream production, pasteurization, degassing, chilling, acidification and dyeing, physical and biological maturation of the cream, preparation for butter formation, butter formation, churning, salting (only for salted butter) forming and packaging.

Furthermore, other butters are also produced: whey butter (the source substrate is whey, rather than full milk), clarified butter (obtained through the melting of ordinary butter with taste, structure, consistency or color defects), dehydrated butter (additionally centrifuged and vacuum-dried), dietary butter (containing a higher proportion of water than ordinary butter and edible oil additives), and flavored butter, i.e. with chocolate [http://www.chemia.px.pl/roznosci/zywnosc_maslo.html].

Polish patent description PL177732 (published 23-12-1996) presents a method of producing composite butters. In said solution, milk is heated to a temperature of 45 to 50°C and then centrifuged in order to obtain cream containing 52 to 54% fat. Immediately after centrifugation, the cream is pasteurized at 85 to 97 °C for 25 to 35 sec. Further on, the cream is degassed below 100°C at a pressure of 5,0 do 7,0 hPa. After degassing the cream is heated again to 45 to 50 °C and the following are added: an amulsifying/stabilizing mixture (1.4 to 1.9 kg per 100 1 of cream), salt at 0.35 do 0.55 kg per 100 1 of cream and a flavoring agent such as garlic at 0.075 to 0.095 kg per 100 1 of cream. This mixture is supplemented with citric acid at 0.1 to 0.15 kg per 100 1 of cream and if needed a small quantity of aroma. The mixture is then homogenized and temperature treated at 90°C for up to 15 minutes. Butter produced in this way is packed in unit packaging and stored. The above method of producing composite butters may be utilized in all dairies equipped with various types of temperature treatment apparatus. Polish patent description PL175638 (published 12-06-1995) presents a method of producing butter-like products with a lower fat content. The method of producing the butter-like products is based on the sterilization of cream containing 35 - 40% fat for a brief time at 100 - 110°C, and then chilling it to 12 - 14°C, acidification with flash-frozen acididying agent, partial crystallization. After a period of 10 - 12 hours butter is formed, the buttermilk is separated and the butter is churned, where the following mixture of oils is added into the front part of the churn: sunflower, palm and coconut oil. This invention is meant to be used in the production of low-fat butter.

Polish patent description PL174056 (published 15-04-1996) presents a method of producing a flavor composition usable as a block of butter through the exposure of acyloglycerols, fatty acids or fatty acid derivatives to oxidizing conditions, and consists of: (a) addition of an antioxidant to acyloglycerols, fatty acids or fatty acid derivatives at a concentration sufficient to elongate the fat induction period by a factor of 1.5, (b) heating of the mixture for a period of 0.5 to 1 week to a temperature of 50 to 150°C in an aerobic atomosphere and preferentially in the presence of water, given the condition that the acyloglycerols, fatty acids or fatty acid derivatives contain at least one polyunsaturated fatty acid with the omega-3 unreactive arrangement of unsaturated bonds constituting at least 0.01% by mass. Such fatty acids or fatty acid derivatives may preferentially be produced by the partial hydrogenation of natural plant acyloglycerols.. Polish patent description PL186755 (published 19-01-1998) describes a foamed edible composition and the and the method of its manufacture. The foamed edible composition is formed from an oil-in-water emulsion, containing fats, milk proteins, possibly sugars and water, with a pH of 3.5 to 6, and is characterized in that it contains 20 to 40% edible fats by mass, 20 to 38% water by mass, contains virtually no thickeners nor melted salts and is made in the following stages: a) the initial heating of an edible source product such as fresh cheese, yoghurt, sour cream or a mixture thereof with continuous mixing to a temperature of 40 to 60 °C, b) dissolution with agitation of powdered milk whey proteins at 1 to 10% (of the total final mass of the emulsion) into the solution prepared during stage a), c) preparation of the lipid phase, containing butter fat and/or plant fats at 50 do 70°C, in the presence of a lipophyllic surfactant, d) mixing of the lipid phase with the phase produced in step b) with continuous agitation, obtaining an oil-in-water emulsion with a viscosity of 500 to 4000 cps at 65°C, e) pasteurization of said emusion at 80 to 110 °C for 20 to 40 seconds, f) initial cooling to 30 to 60°C, and g) perfusion of the mixture with an inert gas.

Polish patent description P-343242 (published 30-07-2001) describes a method of producing a spread for baked goods. The butter-like product for spreading on baked goods, not containing a significant proportion of butter fat is produced starting with plant fat cream. The averaged surface size (D3, 2) of the cream lipid droplets, 3-7 am, ensures the shelf life of the chilled cream, such that given its essentially liquid lipid phase it enters the inverse phase, whereafter a majority of the lipids crystallize after egress from the inversion unit and preferentially in stationary conditions. The cream is converted on a production line for the manufacture of spreads, for baked goods, which contains an apparatus for the production of O/W emulsions with small lipid droplets, a flow-through pasteurizer, heat exchanger and a chambered, mobile churn which can be used for inverting phases.

Polish patent description P-343281 (published 13-08-2001) describes a butter-like, acidified spread for baked goods. Said invention pertains to a spreadable, acidified cream in a dominant, continuous aqueous phase containing no more than 35% by mass of fat and up to 3% by mass of protein. These creams have a butter-like texture and during melting behave like butter as well. The cream is characterized by a free fat content at of 30-85% by mass at 65°C with a Stevens hardness of 200-1000g at a temperature of 5°C and 50-300g at 20°C. The cream leaves a fresh and creamy taste. Polish patent description P-331676 (published 28-08-2000) presents a method of producing butter or butter-like products with extended shelf life and lowered fat content. The method of producing butter and butter-like products is based on the fact that following the separation of buttermilk, the product is gassed and further processing is performed as described. Said invention is applicable in the dairy industry.

Polish patent description P-337974 (published 30-07-2001) presents a method of manufacturing butter-like products with a lower fat content with improved nutritive and palatable properties. The method of producing butter-like products consists of separating buttermilk and the oil-water emulsion is adsorbed onto grains of butter, whereafter further processing is performed as described. Preferentially, the oil-water emulsion contains water with microelements.

Polish patent description P-299252 (published 12-12-1994) described a method of preparing cream for the production of butter supplemented with plant oil. The method is based on the supplementation of cream prior to pasteurization with plant oil in the form of an emulsion of skim milk and oil, most preferentially at a temperature ensuring the maintenance of the fat in a liquid state, that is no lower than 40°C.

Patent descriptions US6461661 (published 08-10-2002) and ZA200007371 (published 11-03-2002) present a butter-like composition and a method of its manufacture. The butter-like composition contains an addition of at least one plant oil, water and at least one hydro-colloid with butter-like product properties.

Patent description DE10356441 (published 14-04-2005) describes a dietary mixture of butter containing low levels of saturated fatty acids characterized by a low cholesterol content obtained through the combination of butter with oil, i.e. olive oil. Its method of manufacture consists of mixing butter in the form of a paste with an oil component for a predetermined length of time in order to obtain a homogenous mixture. This is then chilled to obtain an easily spread consistency, where the oil component is preferentially olive oil or seed oil (preferentially from nuts, pumpkin or grape).

Patent RU2221432 (published 20-01-2004) describes an edible butter preparation containing about 10% of a linseed oil in relation to overall fat content.

Despite the above described research meant to produce butter, margarines or butter-like products a need still exists to obtain an effective solution facilitating the manufacture of products containing a lower level of saturated fatty acids and cholesterol than butter, with concurrently higher levels of mono- and polyunsaturated fatty acids.

The goal of the present invention is to provide the means which could be used to produce butter-like products, characterized by valuable nutritive properties, lowered cholesterol content and to bequeath a characteristic linseed aroma, while maintaining all organoleptic properties of butter. The product will contain live bacterial cultures from the lactic fermentation, which are advantageous to the human digestive system.

The embodiment of said goal and the solution of the problems described in the state of the art, pertaining to the production of containing a lower level of saturated fatty acids and cholesterol than butter, with concurrently higher levels of mono- and polyunsaturated fatty acids have been achieved in the present invention.

The subject of the present invention is edible linseed butter containing 16 to 20% plant oil in relation to total fat content, characterized in that the plant oil is linseed oil, where the linseed oil contains: 5 to 7% palmitic acid C 16:0; 3 to 5% stearic acid C 18:0; 12 to 18% oleic acid C 18:1; and 65 to 75% linoleic acid C 18:2.
Preferentially, the plant oil is cold-pressed linseed oil.
Preferentially, the plant oil is refined linseed oil.
Preferentially, the linseed oil contains up to 0,3% palmitoleic acid C 16:1.
Preferentially, the linseed oil contains up to 0,3% arachidic acid C 20:0.
Preferentially, the linseed oil contains up to 0,3% behenic acid C 22:0:

The next subject of the present invention is a method of manufacturing edible linseed butter, consisting of the separation of cream from milk, pasteurization and biological maturation of the cream, addition of plant oil, butter formation, separation of grains, and churning, characterized in that the milk is heated to 45 to 55°C and the cream is centrifuged off to a fat content of 30 to 35%, which is then pasteurized at 95 to 96°C for 20 - 40 s, whence it is cooled to 6 to 8°C, and acidified with purified lactobacter cultures and left in its container for 11 to 18 hours in order to mature biologically; the separated cream with an acidity of no more than 6 °SH is supplemented with (depending on the time of year) 16 to 20% linseed oil in relation to total fat content, where the linseed oil contains 5 to 7% palmitic acid C 16:1, 3 to 5% stearic acid C 18:0, 12 to 18% oleic acid C 18:1, and 65 to 75% linoleic acid C 18:2, where the mixture undergoes butter formation until butter grains reach a diameter of 3 to 4 mm, the buttermilk is separated from the butter, and then the butter grains are rinsed once or twice with water and after rinsing the butter is churned at low rpm.
Preferentially, 16 - 20% linseed oil are added which is composed of cold-pressed linseed oil.
Preferentially, 16 - 20% linseed oil are added which is composed of refined linseed oil.
Preferentially, the linseed oil contains up to 0,3 % palmitic oil C 16:1.
Preferentially, the linseed oil contains up to 0,3% arachidic oil C 20:0.
Preferentially, the linseed oil contains up to 0,3% behenic C 22:0.
Preferentially, the addition of linseed oil is joined with the butter mass without the use of additional means, i.e. stabilizers and emulsifiers.

Presented below are example embodiments of the present invention defined above.

### Example I

1000 kg of cream containing 30% fat and an acidity of 6 °SH are pasteurized at 95°C for 30 s, chilled to 8°C and matured for 12 hours. Next, the cream is supplemented with 60 kg linseed oil containing: 6.0% palmitic acid, 4.0% stearic acid, 16.0% oleic acid, 72.0% linoleic acid, 2.0% linolenic acid. The mixture undergoes butter formation, the butter grains are separated and rinsed one time with water, whence the butter is churned. This results in the formation of 440 kg of butter, with an overall fat content of 83%.

### Example II

1000 kg of cream, 35% fat and an acidity of 5 °SH, are pasteurized at 96°C for 40 s, chilled to 6°C and matured for 18 hours. Next, the cream is supplemented with 85 kg of linseed oil containing: 5.0% palmitic acid, 5.0% stearic acid, 14.0% oleic acid, 74.0% linoleic acid, 1.1% linolenic acid, 0.3% palmitoleic acid, 0.3% arachidic acid and 0.3% behenic acid. The mixture undergoes butter formation, butter grains are separated, rinsed one time with water and the resulting butter is churned. This process results in 501 kg with an overall fat content of 82,5%.

### Example III

1000 kg of milk are heated in a heat exchanger to 45 - 55°C, and then the cream is centrifuged off. Ca. 100 kg of cream are obtained, containing 30% fat. The cream is pasteurized at 96°C for 20 s, chilled to 7°C and matured for 11 hours. The cream is then supplemented with 6.6 kg of linseed oil containing: 4.0% palmitic acid, 6.0% stearic acid, 18.0% oleic acid, 70.0% linoleic acid, 1.7% linolenic acid, 0.1% palmitoleic acid, 0.1% arachidic acid and 0.1% behenic acid. The mixture undergoes butter formation, the butter grains are separated, rinsed twice with water and the resulting butter is churned. This process results in 44 kg of butter with an average fat content of 83.5%.

### Example IV

1000 kg of milk are heated in a heat exchanger to 45 - 55°C, and then the cream is centrifuged off. Ca. 150 kg of cream are obtained, containing 34% fat. The cream is pasteurized at 95°C for 30 s, chilled to 8°C and matured for 16 hours. The cream is then supplemented with 11.0 kg linseed oil containing: 4.0% palmitic acid, 6.0% stearic acid, 18.0% oleic acid, 70.0% linoleic acid, 1.9% linolenic acid, 0.1% arachidic acid. The mixture undergoes butter formation, the butter grains are separated, rinsed twice with water and the resulting butter is churned. This process results in 70 kg of butter with an average fat content of 83.0%. The technological process makes use of no additives (stabilizers, emulsifiers or preservatives), and the product is not temperature treated.

It is significant, that during the cream maturation the process makes use of a biological procedure as a result of which live lactic bacterial cultures remain in the product, which are advantageous for the human digestive system. Acidification through the addition of the live lactic fermentation bacterial cultures is the core of the production process. The product does not undergo any preservation processes, and is not heat treated. The product has all of the characteristics of a fresh and natural product, maintaining the olfactory and gustatory properties of the ingredients. It possesses a refreshing smell and taste..

## Claims

1. Edible linseed butter containing 16 to 20% plant oil in relation to overall fat content, **characterized in that** the plant oil consists of linseed oil, where the linseed oil contains 5-7% palmitic acid C 16:0, 3-5% stearic acid C 18:0, 12-18% oleic acid C 18:1, 65-75% linoleic acid C 18:2.

2. Linseed butter according to Claim 1, **characterized in that** the plant oil consists of cold-pressed linseed oil.

3. Linseed butter according to Claim 1, **characterized in that** the linseed oil contains up to 0.3% palmitoleic acid C 16:1.

4. Linseed butter according to Claim 1, **characterised in that** the linseed oil contains up to 0.3% arachidic acid C 20:0.

5. Linseed butter according to Claim 1, **characterized in that** the linseed oil contains up to 0.3% behenic acid C 22:0.

6. A method of producing edible Linseed butter, consisting of the separation of cream from milk, pasteurization and biological cream maturation, addition of plant oil, butter formation, separation of butter grains, rinsing and churning, **characterized in that** the milk is heated to a temperature of 45 - 55°C, 30 - 35% fat cream is centrifuged off which is then pasteurized at 95 - 96°C for 20 to 40 s, whence it is chilled to 6 to 8°C, and acidified with purified lactobacter cultures and left in its container for 11 to 18 hours in order to mature biologically; the cream produced, with an acidity of no more than 6°SH, is supplemented with 16 to 20% linseed oil in relation to total fat content [16 % in summer], where the linseed oil contains 5 to 7% palmitic acid C 16:0, 3 to 5% stearic acid C 18:0, 12 to 18% oleic acid C 18:1, 65 to 75 % linoleic acid C 18:2, whence the mixture undergoes butter formation until the butter grains reach 3 to 4 mm in diameter and the buttermilk is separated, then the butter formed is rinsed once or twice with water, and then churned at very low rpm.

7. A method according to Claim 7, **characterised in that** 16 to 20% linseed oil are added , which consists of cold pressed linseed oil.

8. A method according to Claim 7, **characterized in that** linseed oil contains up to 0.3% palmitoleic acid C 16:1.

9. A method according to Claim 7, **characterized in that** linseed oil contains up to 0.3% arachidic acid C 20:0.

10. A method according to Claim 7, **characterized in that** linseed oil contains up to 0.3% behenic acid C 22:0.

11. A method according to Claim 7, **characterized in that** the linseed oil addition is combined with the butter mass without the use of other means, i.e. stabilizers or emulsifiers.

## Patentansprüche

1. Lein-Speisebutter enthaltend in ihrer Zusammensetzung 16 bis 20% Pflanzenöl bezogen auf die Fett-Gesamtmenge, **dadurch gekennzeichnet, dass** das Pflanzenöl Leinöl bildet, wobei das Leinöl 5 - 7% Palmitinsäure C 16:0, 3-5% Stearinsäure C 18:0, 12 - 18% Oleinsäure C 18:1, 65-75% Linolsäure C 18:2 enthält.

2. Leinbutter gemäß Anspruch 1, **dadurch gekennzeichnet, dass** das Pflanzenöl das kalt gepresste Leinöl bildet.

3. Leinbutter gemäß Anspruch 1, **dadurch gekennzeichnet, dass** das Leinöl bis zu 0,3% Palmitinsäure C 16:1 enthält.

4. Leinbutter gemäß Anspruch 1, **dadurch gekennzeichnet, dass** das Leinöl bis zu 0,3% Arachidsäure C 20:0 enthält.

5. Leinbutter gemäß Anspruch 1, **dadurch gekennzeichnet, dass** das Leinöl bis zu 0,3% Behensäure C 22:0 enthält.

6. Das Verfahren zur Herstellung der Lein-Speisebutter, bestehend in der Abtrennung des Rahms von der Milch, Pasteurisierung und biologischer Reifung des Rahms, Zudosierung eines Pflanzenöls, Verbutterung, Abtrennung des Korns, Butterwäsche und -kneten, **dadurch gekennzeichnet, dass** die Milch bis zur Temperatur von 45-55°C erwärmt, anschließend der Rahm enthaltend 30-35% Fett abgeschleudert und dann in der Temperatur von 95-96°C 20 - 40 s lang pasteurisiert, dann auf die Temperatur von 6 - 8°C abgekühlt, Gärstoff aus reinen Bakterienkulturen für Milchfermentation zudosiert und zur biologischen Reifung 11-18 Stunden im Behälter belassen wird, während zum herzustellenden Rahm mit der Acidität nicht höher als 6° SH 16 - 20% Leinöl (im Sommer 16 %) bezogen auf gesamten Fettgehalt zudosiert werden, wobei das Leinöl 5-7% Palmitinsäure C 16:1, 3-5% Stearinsäure C 18:0, 12-18% Oleinsäure C 18:1, 65 - 75% Linolsäure C 18:2 enthält, dann wird das Gemisch so lange verbuttert, bis das Butterkorn einen Durchmesser von 3-4 mm erreicht hat und Butter von Buttermilch abgetrennt, anschließend wird entstandene Butter ein- oder zweimal mit Wasser gewaschen und nach der Wäsche die Butter bei sehr langsamen Drehungen geknetet.

7. Verfahren gemäß Anspruch 7, **dadurch gekennzeichnet, dass** 16 - 20% Leinöl zudosiert werden, das ein kalt gepresstes Leinöl ist.

8. Verfahren gemäß Anspruch 7, **dadurch gekennzeichnet, dass** das Leinöl bis zu 0,3% Palmitinsäure C 16:1 enthält.

9. Verfahren gemäß Anspruch 7, **dadurch gekennzeichnet, dass** das Leinöl bis zu 0,3% Arachidsäure C 20:0 enthält.

10. Verfahren gemäß Anspruch 7, **dadurch gekennzeichnet, dass** das Leinöl bis zu 0,3% Behensäure C 22:0 enthält.

11. Verfahren gemäß Anspruch 7, **dadurch gekennzeichnet, dass** der Zusatz von Leinöl ohne Anwendung von sonstigen Mitteln - wie Stabilisatoren und Emulgatoren mit der Buttermasse gebunden wird.

## Revendications

1. Beurre de graines de lin alimentaire contenant de 16 à 20% d'huile végétale par rapport à la quantité totale de matière grasse, **caractérisé en ce que** l'huile végétale est une huile de lin, l'huile de lin contenant 5 - 7% de l'acide palmitique C 16:0, 3-5% de l'acide stéarique C 18:0, 12-18% de l'acide oléique C 18:1, 65-75% de l'acide linoléique C 18:2.

2. Beurre de graines de lin selon la revendication 1, **caractérisé en ce que** l'huile végétale est une huile de lin pressée à froid.

3. Beurre de graines de lin selon la revendication 1, **caractérisé en ce que** l'huile de lin contient jusqu'à 0,3% de l'acide palmitique C 16:1.

4. Beurre de graines de lin selon la revendication 1, **caractérisé en ce que** l'huile de lin contient jusqu'à 0,3% de l'acide arachidique C 20:0.

5. Beurre de graines de lin selon la revendication 1, **caractérisé en ce que** l'huile de lin contient jusqu'à 0,3% de l'acide béhénique C 22:0.

6. Le procédé de fabrication du beurre de graines de lin consistant à séparer la crème du lait, en pasteurisation et maturation de la crème, en ajout de l'huile végétale, en barattage, séparation des graines, lavage et malaxage du beurre **caractérisé en ce que** le lait est chauffé à 45-558°C, qu'il subit ensuite une centrifugation pour obtenir une crème contenant de 30 à 35% de la matière grasse et une pasteurisation à 95-96°C pendant 20-40 secondes et un refroidissement à 6 - 8°C; on ajoute des cultures bactériennes pour la fermentation lactique et laisse reposer dans un réservoir pendant 11-18 heures pour maturation biologique, la crème ainsi fabriquée d'une acidité non supérieure à 6° SH étant additionnée de 16 - 20% de l'huile de lin par rapport à la teneur totale en matière grasse (16 % en été), l'huile de lin contenant 5 - 7% de l'acide palmitique C 16:1, 3-5% de l'acide stéarique C 18:0, 12 - 18% de l'acide oléique C 18:1, 65 - 75% de l'acide linoléique C 18:2, le mélange subit ensuite un barattage jusqu'au moment où les graines du beurre atteignent un diamètre de 3-4 mm et le beurre se sépare du babeurre, ensuite le beurre ainsi obtenu est rincé une ou deux fois avec de l'eau et le beurre rincé subit un malaxage à très faible vitesse.

7. Procédé selon la revendication 7 **caractérisé en ce qu'**on ajoute 16 - 20% de l'huile de lin qui est une huile de lin pressée à froid.

8. Procédé selon la revendication 7 **caractérisé en ce que** l'huile de lin contient jusqu'à 0,3% de l'acide palmitique C 16:1.

9. Procédé selon la revendication 7 **caractérisé en ce que** l'huile de lin contient jusqu'à 0,3% de l'acide arachidique C 20:0.

10. Procédé selon la revendication 7 **caractérisé en ce que** l'huile de lin contient jusqu'à 0,3% de l'acide béhénique C 22:0.

11. Procédé selon la revendication 7 **caractérisé en ce que** l'ajout d'huile de lin est lié à la masse de beurre sans utilisation d'autres produits - stabilisateurs et émulsifiants.
